# EUROPEAN PATENT SPECIFICATION

(11) **EP 3 670 163 B1**
(45) Date of publication and mention of the grant of the patent: **07.12.2022**
(21) Application number: 19217307.8
(22) Date of filing: 18.12.2019
(51) Int. Cl.: B29D 30/06, B60C 19/12

(54) **TIRE WITH AN ENCAPSULATED SEALANT STRIP LAYER AND METHOD FOR MANUFACTURE**
REIFEN MIT EINER SCHICHT AUS EINEM EINGEKAPSELTEN DICHTUNGSMITTELSTREIFEN UND VERFAHREN ZUR HERSTELLUNG
PNEUMATIQUE DOTÉ D'UNE COUCHE DE BANDE D'ÉTANCHÉITÉ ENCAPSULÉE ET PROCÉDÉ DE FABRICATION

(30) Priority: 19.12.2018 US 201862781761 P; 23.10.2019 US 201916661117
(43) Date of publication of application: 24.06.2020
(73) Proprietor: The Goodyear Tire & Rubber Company, Akron, OH 44316 (US)
(72) Inventor: CHEN, Hongbing, Broadview Heights OH 44147 (US); DYRLUND, Christopher David, Canton OH 44705 (US); BALDAN, Adam Mark, Akron OH 44303 (US)
(74) Representative: Kutsch, Bernd

(56) References cited:
- EP-A1- 1 393 932
- EP-A1- 1 426 201
- EP-A2- 0 080 968
- JP-A- 2000 247 122
- JP-A- 2001 018 609
- JP-A- 2002 362 118
- US-B1- 9 694 629

## Description

### Field of the Invention

The invention relates in general to tire manufacturing and, more particularly, to a tire having a layer of sealant, wherein the sealant layer is preferably a continuous strip of a first elastomer that is encapsulated by a second elastomer, and more particularly, to an encapsulated strip of sealant material.

### Background of the Invention

Pneumatic tires with puncture sealing properties are known to those skilled in the tire art. Typically, such tires include a layer of sealant typically applied on the inside of the tire. The problem with a post cure applied sealant layer is that the sealant may migrate during high speed operation of the tire due to centrifugal forces. Thus, it is desired to have an improved tire having a layer of sealant that is formed from an encapsulated strip of sealant for installation on the inside of the tire.

EP 1 426 201 A1 and US 9,694,629 B1 describe a tire in accordance with the preamble of claim 1 and its method of manufacturing. JP 2001 018609 A discloses a tire comprising a spirally wound sealant layer on the inside of the tire. The thickness and/or width of the sealant is adjusted in order to uniform dynamic unbalances of the tire.

### Summary of the Invention

The invention relates to a pneumatic tire in accordance with claim 1 and to a method in accordance with claim 13.

Dependent claims refer to preferred embodiments of the invention.

In accordance with the invention, pneumatic tire comprising a carcass layer, an inner liner located radially inward of the carcass layer, and a sealant layer is provided. The sealant layer is formed by spirally winding a strip of encapsulated sealant material.

In a preferred aspect of the invention, the sealant layer is formed from a single layer of strips.

In a preferred aspect of the invention, the strips are overlapped with each other.

In a preferred aspect of the invention, the ratio of sealant material to gum rubber is varied in the lateral direction across the sealant layer.

In a preferred aspect of the invention, the strips at the lateral edges of the sealant layer contain no sealant material.

In a preferred aspect of the invention, the one or more strips at the lateral edges are in the range of 70 % to 100% of a rubber material.

The pneumatic tire of claim 1 wherein the one or more strips inside the lateral edges are in the range of 70 % to 100% sealant.

In a preferred aspect of the invention, the cross-sectional shape of the strip is rectangular, preferably with rounded edges.

In a preferred aspect of the invention, the sealant layer is located radially inward of the inner liner of the tire.

In one aspect of the invention, a method of manufacturing a pneumatic tire having a sealant layer is provided. The method comprises the steps of: forming a carcass layer of the tire; forming an inner liner layer of the tire located radially inward of the carcass layer; and forming a sealant layer by spirally winding a strip, the strip comprising an encapsulated sealant material in at least one region of the sealant layer.

### Definitions

"Axial" and "axially" means the lines or directions that are parallel to the axis of rotation of the tire.

"Radial" and "radially" mean directions radially toward or away from the axis of rotation of the tire.

### Brief Description of the Drawings

The invention will be described by way of example and with reference to the accompanying drawings in which:
FIG. 1 is a schematic view of a dual compound strip forming apparatus;
FIG. 2A is a close-up view of a nozzle of the compound strip forming apparatus of FIG. 1;
FIG. 2B is a close-up view of the nozzle outlet;
FIG. 3A is a side cross-sectional view of the nozzle of FIG. 2B;
FIG. 3B is a front view of the nozzle of FIG. 3A;
FIG. 3C is a side perspective view of the nozzle of FIG. 3A;
FIG. 3D is a cross section along the lines D-D of FIG. 3A;
FIG. 3E is a close-up view of the circled portion of FIG. 3A;
FIG. 3F is a rear view of the nozzle;
FIG. 4A is a cross-sectional view of a nozzle of the present invention;
FIG. 4B is a cross-sectional view of a nozzle and removable insert;
FIG. 4C is a top perspective view of a removable insert;
FIG. 4D is a bottom perspective view of a removable insert;
FIG. 5A illustrates a 50-50 encapsulated strip;
FIG. 5B illustrates a 90-10 encapsulated strip;
FIG. 6A illustrates an encapsulated strip with a 90% sealant 10% outer layer;
FIG. 6B illustrates an encapsulated strip with an 80% sealant 20% outer layer;
FIG. 6C illustrates an encapsulated strip with a 50% sealant 50% outer layer;
FIG. 7 illustrates a first embodiment of a spirally wound encapsulated strip configuration of sealant;
FIG. 8 illustrates a cross-sectional view of the sealant configuration of FIG. 7; and
FIG. 9 illustrates a perspective view of a tire having a sealant on the inner surface of the tire.

### Detailed Description of Example Embodiments of the Invention

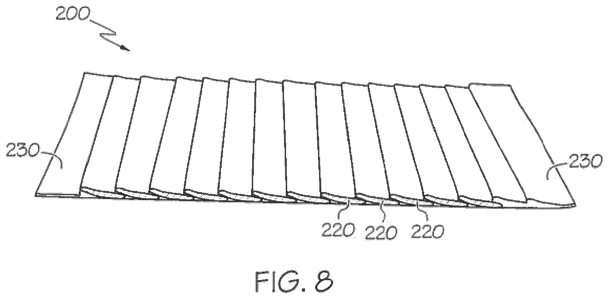

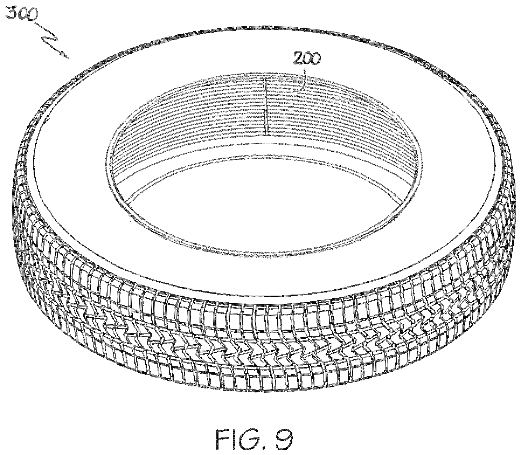

FIG. 9 illustrates a tire 300 of the present invention having a sealant layer 210 located on the inside layer of the tire, i.e. on the innerliner and radially under the tire crown. The tire 300 is preferably conventional. The sealant layer 210 is formed by spirally winding a strip 220 preferably such that the strips 220 overlap with each other. Preferably, there is only a single layer of strips 220, as shown in Fig. 8, the layer extending axially under the tire crown from one lateral edge 230 to another lateral edge 230. The strip 220 is preferably continuous and is formed of encapsulated sealant, as described in more detail, below.

### FORMATION OF THE ENCAPSULATED STRIP OF SEALANT

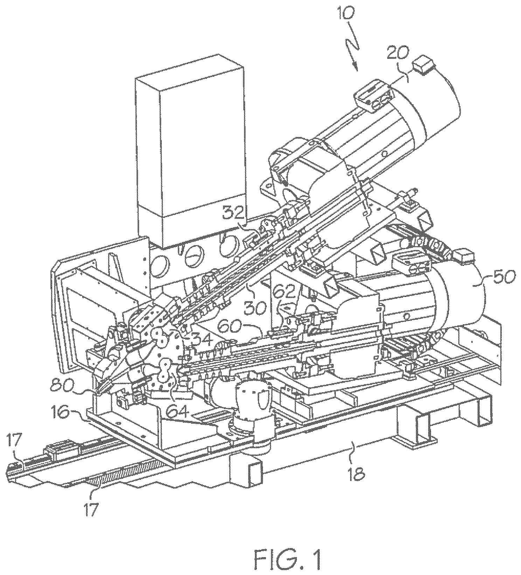

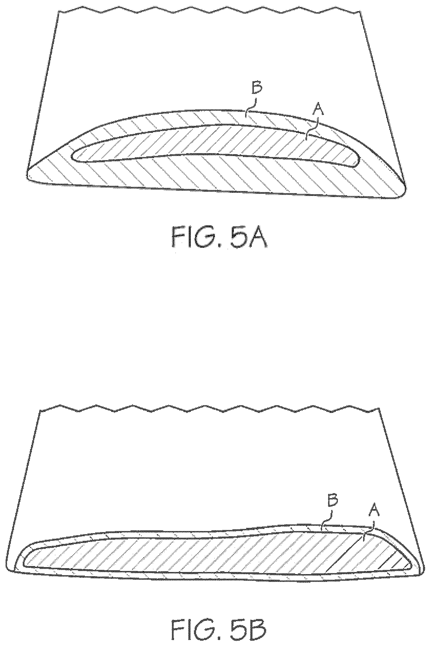

FIG. 1 illustrates a first embodiment of a dual compound strip forming apparatus 10 suitable for use for making a continuous strip of a first rubber compound A such as a sealant, that is encapsulated in a second rubber compound B as shown in FIGS. 5-6. The dual compound strip forming apparatus 10 is not limited to tire applications and may be used for example, to make other rubber components not related to tires such as conveyors, hoses, belts, etc. The dual compound strip forming apparatus 10 may be provided directly at the tire or component building station for direct application of the rubber composition to a tire, component, or other component building apparatus.

The dual compound strip forming apparatus 10 is preferably mounted upon a translatable support bar 16 that is slidable fore and aft on parallel rails 17 of a support frame 18 so that the dual compound strip forming apparatus 10 can translate fore and aft in relation to a tire building machine or a tire building drum 100 or directly on a tire carcass or a tire innerliner layer.

As shown in FIG. 1A, the dual compound strip forming apparatus 10 includes a first extruder 30 and a second extruder 60, preferably arranged in a vertically stacked configuration as shown. The first extruder 30 has an inlet 32 for receiving a first rubber composition A as described in more detail, below. The first extruder 30 is driven by motor 20 such as an electrical motor. The second extruder 60 has an inlet 62 for receiving a second rubber composition B as described in more detail, below. The second extruder 60 is driven by motor 50 such as an electrical motor. The first or second extruder 30, 60 may be any commercial extruder suitable for processing of rubber or elastomer compounds. The extruder may be a commercially available extruder commonly known by those skilled in the art as a pin type extruder, a twin screw or a single screw extruder, or a ring type of extruder. Preferably, the extruder has a length to diameter ratio (L/D) of 4 to 6, preferably 5, but it may also range from 3 to 20. A pin type of extruder is preferred.

The first extruder inlet 32 receives a first compound A, examples of which are described in more detail, below. The first extruder 30 functions to warm up a first compound A to the temperature in the range of from 80°C to 150°C, preferably from 90°C to 120°C, and to masticate the rubber composition as needed. The output end 34 of the first extruder 30 is connected to an inlet end 43 of a first gear pump 42. Compound A is thus first extruded by the first extruder 30 and then pumped by the first gear pump 42 into a nozzle 80. The first gear pump 42 functions as a metering device and a pump and may have gears such as planetary gears, bevel gears or other gears.

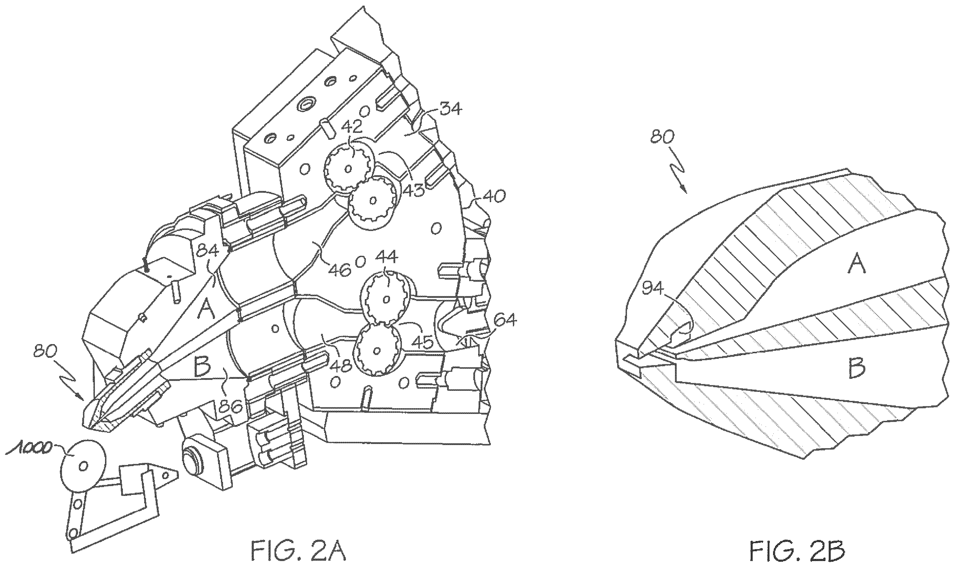

The second extruder inlet 62 receives a second compound B, examples of which are described in more detail, below. The second extruder 60 functions to warm up the second compound B to the temperature in the range of from 80°C to 150°C, preferably from 90°C to 120°C, and to masticate the rubber composition as needed. The output end 64 of the second extruder 60 is connected to an inlet end 45 of a second gear pump 44 as shown in FIG. 2A. Compound B is thus extruded by the second extruder 60 and then pumped by the second gear pump 44, which functions as a metering device and a pump and may have gears such as planetary gears, bevel gears or other gears.

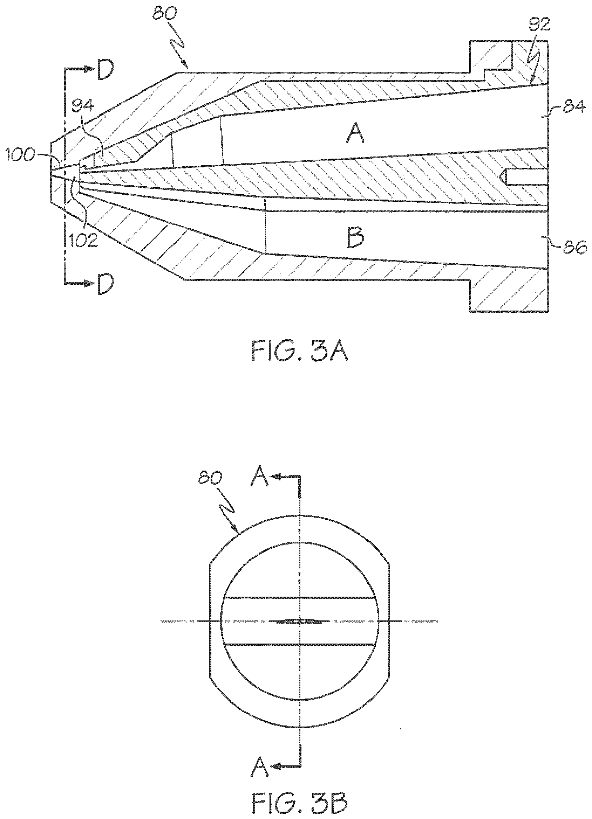

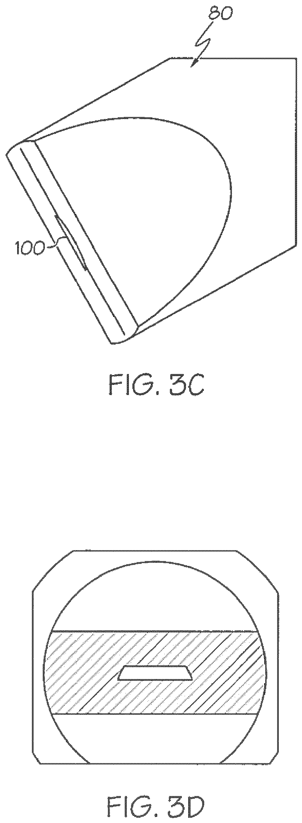

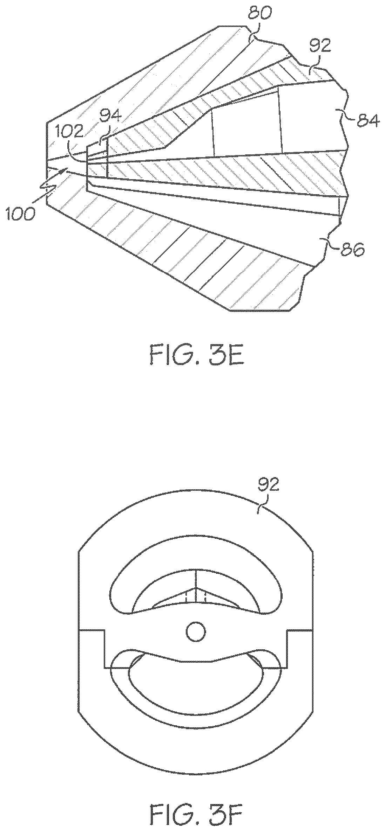

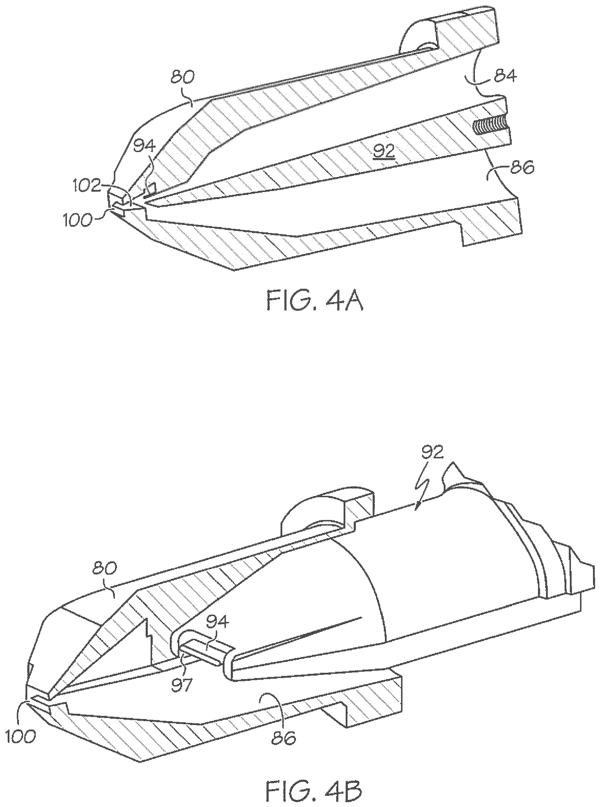

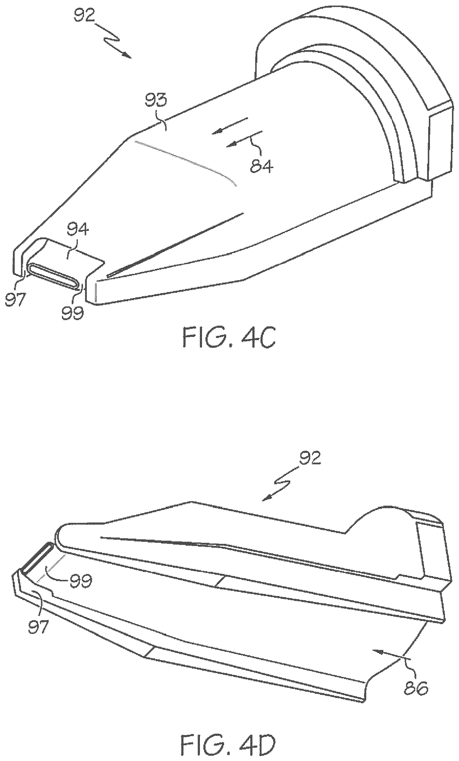

The first and second gear pumps 42, 44 may be housed in a single housing 40 and are preferably placed in close proximity to each other so that the outlet channels 46, 48 of the first and second gear pumps 42, 44 are also in close proximity, as shown in FIG. 2A. The gear pump outlet channels 46, 48 are fed into respective first and second nozzle channels 84, 86 of nozzle 80. FIG. 3A illustrates a cross-sectional side view of the nozzle 80. The first and second nozzle channels 84, 86 are formed by a removable insert 92 that is used to separate the internal flow passageways 88, 90. FIG. 4C illustrates the upper surface 93 of the removable insert 92 that forms the first nozzle channel 84 that flows the compound A to be encapsulated. The removable insert 92 has an upper surface that terminates in an elongated flat portion 94 that is located at the entrance to the die 102. There are two slits or short passageways 97, 99 on each side of the elongated flat portion 94 of the insert that facilitate the encapsulation flow of compound B around compound A.

The first and second nozzle channels 84, 86 remain separated from each other so that the two rubber flow streams do not merge until the exit of the nozzle 80. At the entrance to the flow die 102, the compound B flow stream flows around the compound A stream so that a continuous strip of compound A is encapsulated by a thin skin of compound B. Thus, the flow streams of compound A and B do not mix together to form a mixed compound.

Thus, the apparatus of the invention produces an encapsulated continuous strip of compound A that is encapsulated by skin of compound B which leaves to outlet end 100 of the die 102.

An example strip is shown in FIG. 5B, with the sealant A being 90% of the mixture and being encapsulated by an outer shell or skin B of 10% by volume of the mixture.

FIG. 5A illustrates 50% of the sealant A being encapsulated by an outer shell B of 50% by volume of the mixture.

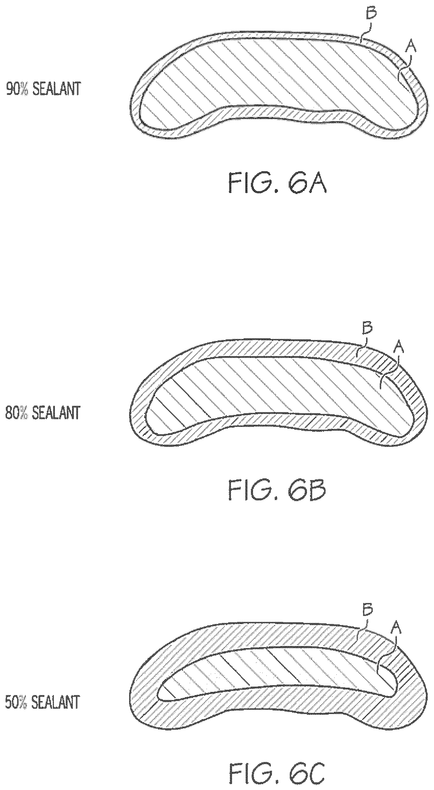

FIGS. 6A-6C illustrate side by side comparison of varying amounts of sealant.

The volume ratio of compound A to compound B may be altered, as shown in FIG. 6A with 90% compound A, 10% compound B, while FIG. 6B illustrates 80% compound A, 20% compound B, and FIG. 6C illustrates 50% A, 50% B. The volume ratio of A to B is preferably varied by varying the ratio of the speed of gear pump A to the speed of gear pump B.

In one embodiment, the sealant material suitable for use is described in US-A-4,359,078, in US-B-6,837,287 or in US-A-2006/0169393.

The outer skin material is selected to bond readily to the inner liner or other layers of the tire. Preferably, the skin material has the same composition as one of the tire components to which the sealant strip is bonded to.

A method for forming a continuous strip of compound of a sealant encapsulated by a gum rubber comprises the steps of: extruding the sealant compound through a first extruder and then pumping the sealant through a first gear pump and into a first passageway of a nozzle, while at the same time extruding a gum rubber through a second extruder and then pumping the gum rubber through a second gear pump and into a second passageway of a nozzle, wherein the first and second passageways are joined together at the inlet of the die outlet of a nozzle. Preferably, the first and second compound exit the die outlet of the nozzle wherein the sealant is encapsulated by the gum rubber. The nozzle preferably has a removable insert which divides the nozzle into a separated first and second passageway, wherein the removable insert has a distal end for positioning adjacent a die outlet of the nozzle, wherein the distal end has an elongated flat portion. Preferably there are slits located on each end of the elongated flat portion to facilitate encapsulation of the flow. More preferably, the ratio of the volume of the encapsulated rubber to the volume of the skin is varied by changing the ratio of the speed of the first gear pump to the second gear pump.

### FORMATION OF THE SEALANT LAYER IN A GREEN TIRE

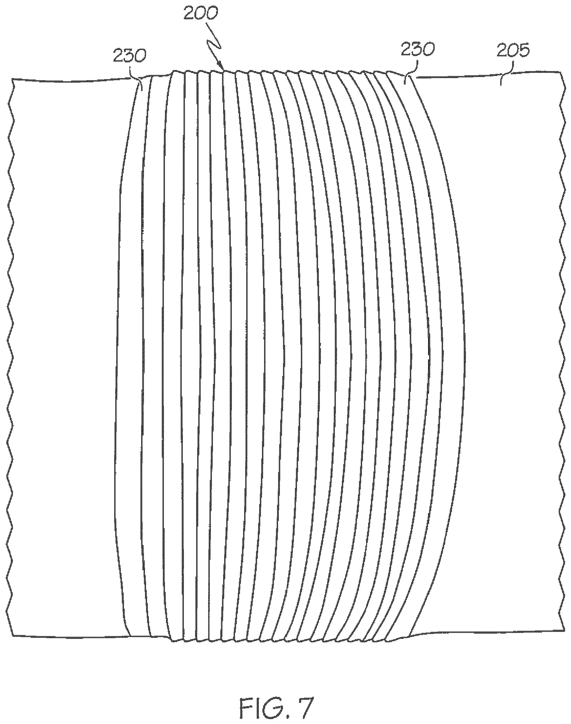

A first embodiment of a method of forming a sealant layer is shown in FIG. 7 and in FIG. 8. Using the dual compound strip forming apparatus 10, an encapsulated strip 220 of sealant is spirally wound onto a tire building drum 205. The strips are partially overlapped with each other as shown in FIG. 7. At the lateral edges 230 of the sealant configuration 200, there are preferably at least one, more preferably two windings of 100% gum rubber, such as barrier gum rubber, at each lateral edge 230.

The width of each strip 220 is preferably in the range of from 3 mm to 5 mm, and is shown at 3.5 mm. The lateral edges may range from 70% to 100% gum or barrier rubber, with the balance being sealant.

After the strips 220 are spirally wound on the drum 205, the strips 220 are cut, pulled off the drum, and then the ends are spliced together and manually inserted in the tire 300.

## Claims

1. A pneumatic tire (300) comprising a carcass layer, an inner liner layer located radially inward of the carcass layer, and a sealant layer (200), wherein the sealant layer (200) is formed by a spirally wound strip (200) and wherein the spirally wound strip (200) comprises an encapsulated sealant material (A) in at least one region of the sealant layer (200), **characterized in that** the ratio of the sealant material (A) to a material (B) encapsulating the sealant material (A) in the spirally wound strip (200) varies across the axial width of the sealant layer (200).

2. The pneumatic tire of claim 1 wherein the sealant layer (200) is formed from a single layer the spirally wound strip (200).

3. The pneumatic tire of claim 1 or 2 wherein the spiral windings of the strip (200) are overlapped with each other.

4. The pneumatic tire of claim 3 wherein the overlapping axial width of the spiral windings of the strip (200) is in a range of from 5 to 15 percent of the axial width of the strip (200).

5. The pneumatic tire of at least one of the previous claims wherein the material (B) is a rubber or rubber compound.

6. The pneumatic tire of at least one of the previous claims wherein the one or two axially outermost windings on each lateral edge (230) of the sealant layer (200) are formed by windings of the strip (200) containing no sealant material (A).

7. The pneumatic tire of at least one of the previous claims wherein sealant layer (200) comprises the sealant material (A) in all regions of the sealant layer (200) across the axial width of the sealant layer (200) except possibly in both lateral edge regions of the sealant layer (200).

8. The pneumatic tire of at least one of the previous claims wherein one, two or more axially outermost windings on each lateral edge (230) of the sealant layer (200) are formed by 70% to 100% of a rubber or a rubber composition and/or by 30% to 0% of the encapsulated sealant material (A).

9. The pneumatic tire of at least one of the previous claims wherein windings of the strip (200) axially inside of the one, two or more axially outermost windings forming the lateral edges (230) of the sealant layer (200) are formed by at least 40%, preferably 70% to 95%, of the encapsulated sealant material (A).

10. The pneumatic tire of at least one of the previous claims wherein the cross-sectional shape of the strip (200) is at least substantially rectangular.

11. The pneumatic tire of at least one of the previous claims wherein the sealant layer (200) is located radially inward of the inner liner layer of the tire (300).

12. The pneumatic tire of at least one of the previous claims wherein the material (B) encapsulating the sealant material (A) forms a skin or shell of the strip (200).

13. A method of manufacturing a pneumatic tire (300) having a sealant layer (200), the method comprising the steps of:
forming a carcass layer of the tire (300);
forming an inner liner layer of the tire (300) located radially inward of the carcass layer; and
forming a sealant layer (200) by spirally winding a strip (200), the strip (200) comprising an encapsulated sealant material (A) in at least one region of the sealant layer (200), **characterized in that**
the ratio of the sealant material (A) to a material (B) encapsulating the sealant material (A) in the spirally wound strip (200) is varied across the axial width of the sealant layer (200).

14. The method of claim 13 wherein the material (B) is a rubber or rubber compound.

15. The method of claim 13 or 14 wherein the ratio of the sealant material (A) to the material (B) encapsulating the sealant material (A) is varied such that one or two axially outermost windings on each lateral edge (230) of the sealant layer (200) contain no sealant material (A).

## Patentansprüche

1. Luftreifen (300), umfassend eine Karkassenschicht, eine Innenabdichtungsschicht, die sich innerhalb der Karkassenschicht radial befindet, und eine Konservierungsmittelschicht (200), wobei die Konservierungsmittelschicht (200) durch einen spiralförmig gewickelten Streifen (200) ausgebildet ist und wobei der spiralförmig gewickelte Streifen (200) ein eingekapseltes Konservierungsmittelmaterial (A) in mindestens einer Region der Konservierungsmittelschicht (200) umfasst, **dadurch gekennzeichnet, dass** das Verhältnis des Konservierungsmittelmaterials (A) zu einem Material (B), das das Konservierungsmittelmaterial (A), in dem spiralförmig gewickelten Streifen (200) einkapselt, über die axiale Breite der Konservierungsmittelschicht (200) variiert.

2. Luftreifen nach Anspruch 1, wobei die Konservierungsmittelschicht (200) aus einer einzigen Schicht des spiralförmig gewickelten Streifens (200) ausgebildet ist.

3. Luftreifen nach Anspruch 1 oder 2, wobei die spiralförmigen Wicklungen des Streifens (200) einander überlappen.

4. Luftreifen nach Anspruch 3, wobei die überlappende axiale Breite der spiralförmigen Wicklungen des Streifens (200) in einem Bereich von 5 bis 15 Prozent der axialen Breite des Streifens (200) liegt.

5. Luftreifen nach mindestens einem der vorstehenden Ansprüche, wobei das Material (B) ein Kautschuk oder eine Kautschukverbindung ist.

6. Luftreifen nach mindestens einem der vorstehenden Ansprüche, wobei die eine oder zwei axial äußersten Wicklungen an jeder Seitenkante (230) der Konservierungsmittelschicht (200) durch Wicklungen des Streifens (200) ausgebildet sind, die kein Konservierungsmittelmaterial (A) enthalten.

7. Luftreifen nach mindestens einem der vorstehenden Ansprüche, wobei die Konservierungsmittelschicht (200) das Konservierungsmittelmaterial (A) in allen Regionen der Konservierungsmittelschicht (200) über die axiale Breite der Konservierungsmittelschicht (200), außer möglicherweise in beiden Seitenkantenregionen der Konservierungsmittelschicht (200), umfasst.

8. Luftreifen nach mindestens einem der vorstehenden Ansprüche, wobei eine, zwei oder mehr axial äußerste Wicklungen an jeder Seitenkante (230) der Konservierungsmittelschicht (200) durch 70 % bis 100 % eines Kautschuks oder einer Kautschukzusammensetzung und/oder durch 30 % bis 0 % des eingekapselten Konservierungsmittelmaterials (A) ausgebildet sind.

9. Luftreifen nach mindestens einem der vorstehenden Ansprüche, wobei Wicklungen des Streifens (200) axial innerhalb der einen, zwei oder mehr axial äußersten Wicklungen, die die Seitenkanten (230) der Konservierungsmittelschicht (200) ausbilden, durch mindestens 40 %, vorzugsweise 70 % bis 95 % des eingekapselten Konservierungsmittelmaterials (A) ausgebildet sind.

10. Luftreifen nach mindestens einem der vorstehenden Ansprüche, wobei die Querschnittsform des Streifens (200) mindestens im Wesentlichen rechteckig ist.

11. Luftreifen nach mindestens einem der vorstehenden Ansprüche, wobei sich die Konservierungsmittelschicht (200) innerhalb der Innenabdichtungsschicht des Reifens (300) radial befindet.

12. Luftreifen nach mindestens einem der vorstehenden Ansprüche, wobei das Material (B), das das Konservierungsmittelmaterial (A) einkapselt, eine Haut oder eine Hülle des Streifens (200) ausbildet.

13. Verfahren zum Herstellen eines Luftreifens (300), der eine Konservierungsmittelschicht (200) aufweist, das Verfahren die Schritte umfassend:
Ausbilden einer Karkassenschicht des Reifens (300);
Ausbilden einer Innenabdichtungsschicht des Reifens (300), die sich innerhalb der Karkassenschicht radial befindet; und
Ausbilden einer Konservierungsmittelschicht (200) durch spiralförmiges Wickeln eines Streifens (200), der Streifen (200) umfassend ein eingekapseltes Konservierungsmittelmaterial (A) in mindestens einer Region der Konservierungsmittelschicht (200), **dadurch gekennzeichnet, dass**
das Verhältnis des Konservierungsmittelmaterials (A) zu einem Material (B), das das Konservierungsmittelmaterial (A) in dem spiralförmig gewickelten Streifen (200) einkapselt, über die axiale Breite der Konservierungsmittelschicht (200) variiert wird.

14. Verfahren nach Anspruch 13, wobei das Material (B) ein Kautschuk oder eine Kautschukverbindung ist.

15. Verfahren nach Anspruch 13 oder 14, wobei das Verhältnis des Konservierungsmittelmaterials (A) zu dem Material (B), das das Konservierungsmittelmaterial (A) einkapselt, derart variiert wird, dass eine oder zwei axial äußerste Wicklungen an jeder Seitenkante (230) der Konservierungsmittelschicht (200) kein Konservierungsmittelmaterial (A) enthalten.

## Revendications

1. Bandage pneumatique (300) qui comprend une couche faisant office de carcasse, une couche faisant office de calandrage intérieur qui est disposée, dans la direction radiale, à l'intérieur de la couche faisant office de carcasse, et une couche (200) procurant une étanchéité ; dans lequel on obtient la couche (200) procurant une étanchéité par l'intermédiaire d'une bande (200) qui est enroulée en spirale ; et dans lequel la bande (200) enroulée en spirale comprend une matière encapsulée (A) qui procure une étanchéité dans au moins une zone de la couche (200) procurant une étanchéité ; **caractérisé en ce que** le rapport entre la matière (A) qui procure une étanchéité et une matière (B) qui encapsule la matière (A) qui procure une étanchéité dans la bande (200) enroulée en spirale varie sur toute la largeur axiale de la couche (200) procurant une étanchéité.

2. Bandage pneumatique selon la revendication 1, dans lequel on obtient la couche (200) procurant une étanchéité à partir d'une couche unique de la bande (200) enroulée en spirale.

3. Bandage pneumatique selon la revendication 1 ou 2, dans lequel les enroulements en spirale de la bande (200) se chevauchent les uns les autres.

4. Bandage pneumatique selon la revendication 3, dans lequel la largeur axiale de chevauchement des enroulements en spirale de la bande (200) se situe dans une plage qui représente de 5 à 15 pour cent de la largeur axiale de la bande (200).

5. Bandage pneumatique selon au moins une des revendications précédentes, dans lequel la matière (B) représente un caoutchouc ou un composé à base de caoutchouc.

6. Bandage pneumatique selon au moins une des revendications précédentes, dans lequel on obtient ledit un enroulement ou lesdits deux enroulements le ou les plus externe(s) dans la direction axiale sur chaque bord latéral (230) de la couche (200) procurant une étanchéité par l'intermédiaire d'enroulements de la bande (200) qui ne contiennent pas une matière (A) qui procure une étanchéité.

7. Bandage pneumatique selon au moins une des revendications précédentes, dans lequel la couche (200) procurant une étanchéité comprend la matière (A) qui procure une étanchéité dans toutes les zones de la couche (200) procurant une étanchéité sur toute la largeur axiale de la couche (200) procurant une étanchéité, à l'exception, le cas échéant, des deuxzones marginales latérales de la la couche (200) procurant une étanchéité.

8. Bandage pneumatique selon au moins une des revendications précédentes, dans lequel on obtient un enroulement, deux enroulements les plus externes dans la direction axiale ou plus sur chaque bord latéral (230) de la couche (200) procurant une étanchéité avec de 70 % à 100 % d'un caoutchouc ou d'une composition à base de caoutchouc et/ou avec de 30 % à 0 % de la matière encapsulée (A) qui procure une étanchéité.

9. Bandage pneumatique selon au moins une des revendications précédentes, dans lequel on obtient des enroulements de la bande (200) dans la direction axiale du côté interne d'un enroulement, de deux enroulements ou plus le(s) plus externe(s) dans la direction axiale qui forme(nt) les bords latéraux (230) de la couche (200) procurant une étanchéité avec au moins 40 pour cent, de préférence avec de 70 pour cent à 95 pour cent de la matière encapsulée (A) qui procure une étanchéité.

10. Bandage pneumatique selon au moins une des revendications précédentes, dans lequel la configuration en section transversale de la bande (200) est de forme rectangulaire au moins à titre essentiel.

11. Bandage pneumatique selon au moins une des revendications précédentes, dans lequel la couche (200) procurant une étanchéité du côté interne, dans la direction radiale, de la couche du bandage pneumatique (300) faisant office de calandrage intérieur.

12. Bandage pneumatique selon au moins une des revendications précédentes, dans lequel la matière (B) qui encapsule la matière (A) qui procure une étanchéité forme une peau ou une enveloppe de la bande (200).

13. Procédé de confection d'un bandage pneumatique (300) qui possède une couche (200) procurant une étanchéité, le procédé comprenant les étapes dans lesquelles :
on forme une couche du bandage pneumatique (300) faisant office de carcasse ;
on forme une couche du bandage pneumatique (300) faisant office de calandrage intérieur, qui est située du côté interne, dans la direction radiale, de la couche faisant office de carcasse ; et
on forme une couche (200) procurant une étanchéité par l'intermédiaire d'un enroulement en spirale d'une bande (200), la bande (200) comprenant une matière encapsulée (A) qui procure une étanchéité dans au moins une zone de la couche (200) procurant une étanchéité, **caractérisé en ce que** le rapport entre la matière (A) qui procure une étanchéité et une matière (B) qui encapsule la matière (A) qui procure une étanchéité dans la bande (200) enroulée en spirale varie sur toute la largeur axiale de la couche (200) procurant une étanchéité.

14. Procédé selon la revendication 13, dans lequel la matière (B) représente un caoutchouc ou un composé à base de caoutchouc.

15. Procédé selon la revendication 13 ou 14, dans lequel on fait varier le rapport entre la matière (A) qui procure une étanchéité et la matière (B) qui encapsule la matière (A) qui procure une étanchéité d'une manière telle qu'un enroulement ou que deux enroulements le(s) plus externe(s) dans la direction axiale sur chaque bord latéral (230) de la couche (200) procurant une étanchéité ne contient/contiennent aucune matière (A) qui procure une étanchéité.
